# DEMANDE DE BREVET EUROPEEN

(11) **EP 4 455 472 A1**
(43) Date de publication de la demande: **30.10.2024**
(21) Numéro de dépôt: 24170260.4
(22) Date de dépôt: 15.04.2024
(51) Int. Cl.: F02K 1/72

(54) **NACELLE D'AÉRONEF ÉQUIPÉE D'AU MOINS UN DISPOSITIF D'INVERSION DE POUSSÉE COMPRENANT UN DÉFLECTEUR AVAL, AÉRONEF COMPRENANT AU MOINS UN ENSEMBLE DE PROPULSION COMPORTANT UNE TELLE NACELLE**

(30) Priorité: 26.04.2023 FR 2304214
(71) Demandeur: AIRBUS OPERATIONS (S.A.S.), 31060 Toulouse (FR)
(72) Inventeur: CHELIN, Frédéric, 31060 TOULOUSE (FR); BOURDEAU, Christophe, 31060 TOULOUSE (FR); SCHOLZ, Olivier, 31060 TOULOUSE (FR)
(74) Mandataire: Fantin, Laurent

(57) **Abrégé**

Nacelle (54) d'aéronef équipée d'un dispositif d'inversion de poussée (62) qui comprend :
- au moins un système de déviation (72) configuré pour dévier un flux d'air (60) canalisé dans la nacelle (54) vers une ouverture latérale (64) de la nacelle (54), à l'état activé,
- au moins un système d'orientation (74) comportant :
∘ au moins un déflecteur transversal (76) configuré pour orienter le flux d'air (60) dévié par le système de déviation (72) vers l'extrémité amont de la nacelle (54),
∘ au moins un déflecteur aval (86) positionné au niveau du bord aval de l'ouverture latérale (64) et configuré pour dévier le flux d'air dévié par le système de déviation (72) vers l'extrémité amont de la nacelle (54).

Le déflecteur aval (86) permet de dévier le flux d'air produit par le dispositif d'inversion de poussée (62) afin qu'il n'impacte pas le bord aval de l'ouverture latérale (64).

## Description

La présente demande se rapporte à une nacelle d'aéronef équipée d'au moins un dispositif d'inversion de poussée comprenant un déflecteur aval ainsi qu'à un aéronef comprenant au moins un ensemble de propulsion d'aéronef comportant une telle nacelle.

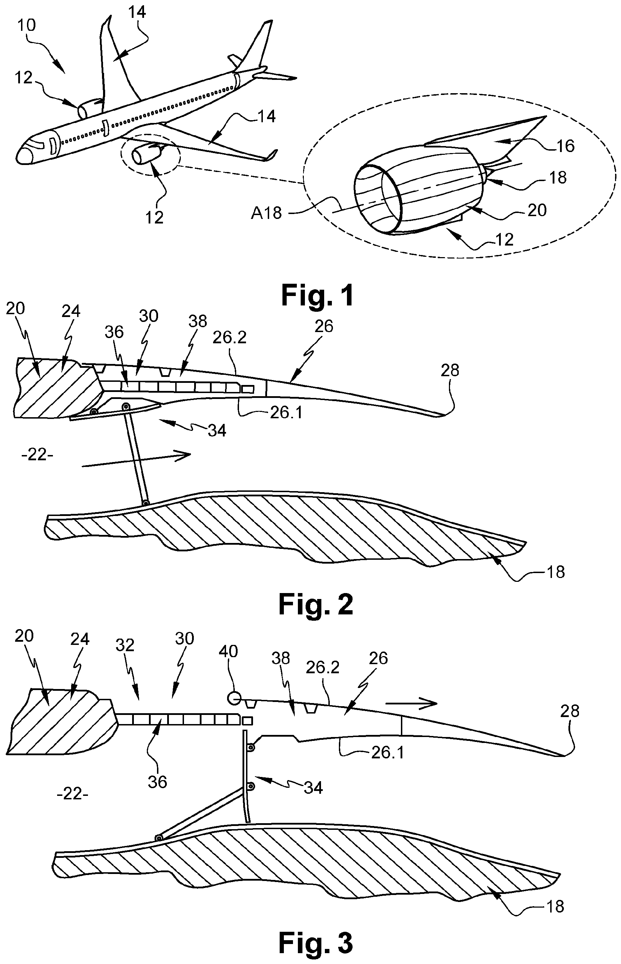

Selon un mode de réalisation visible sur les figures 1 à 3, un aéronef 10 comprend plusieurs ensembles de propulsion 12 positionnés sous chacune des ailes 14 de l'aéronef 10 et reliés à ces dernières par des mâts 16. Chaque ensemble de propulsion 12 comprend une motorisation 18 positionnée à l'intérieur d'une nacelle 20. La motorisation 18 comprend une soufflante qui présente un axe de rotation A18.

Pour la suite de la description, une direction longitudinale est parallèle à l'axe de rotation A18. Un plan longitudinal est un plan contenant l'axe de rotation A18 et un plan transversal est un plan perpendiculaire à l'axe de rotation A18. Les notions avant/amont et arrière/aval font référence au sens d'écoulement d'un flux d'air dans la nacelle 20, ce dernier s'écoulant d'avant (de l'amont) vers l'arrière (l'aval).

La nacelle 20 a une forme approximativement tubulaire et délimite avec la motorisation 18 un conduit annulaire 22 dans lequel s'écoule un flux d'air secondaire. La nacelle 20 comprend une partie amont 24 ainsi qu'une partie aval 26 qui s'étend jusqu'à un bord de fuite 28.

La nacelle 20 comprend un dispositif d'inversion de poussée 30 positionné au niveau de la partie aval 26 et configuré pour occuper un état activé dans lequel il dévie au moins une partie du flux d'air secondaire circulant dans le conduit annulaire 22 vers l'extérieur et l'amont de la nacelle 20 ainsi qu'un état inactivé dans lequel il ne dévie pas le flux d'air secondaire circulant dans le conduit annulaire 22.

Le dispositif d'inversion de poussée 30 comprend au moins une ouverture latérale 32 (visible sur la figure 3) traversant la nacelle 20. Selon une configuration, la partie aval 26 de la nacelle 20 est mobile entre une première position, correspondant à l'état inactivé du dispositif d'inversion de poussée 30, dans laquelle la partie aval 26 est en contact avec la partie amont 24 (comme illustré sur la figure 2) et une deuxième position, correspondant à l'état activé du dispositif d'inversion de poussée 30, dans laquelle la partie aval 26 est écartée de la partie amont 24 de manière à générer l'ouverture latérale 32 (comme illustré sur la figure 3).

Le dispositif d'inversion de poussée 30 comprend un système de déviation 34 configuré pour occuper une position rétractée (visible sur la figure 2), lorsque le dispositif d'inversion de poussée 30 est à l'état inactivé, dans laquelle le système de déviation 34 n'interfère pas avec le flux d'air secondaire ainsi qu'une position déployée (visible sur la figure 3), lorsque le dispositif d'inversion de poussée 30 est à l'état activé, dans laquelle le système de déviation 34 interfère avec le flux d'air secondaire et l'oriente vers l'ouverture latérale 32.

Le dispositif d'inversion de poussée 30 comprend également un système d'orientation 36 configuré pour orienter vers l'extérieur et l'amont de la nacelle le flux d'air dévié par le système de déviation 34. En complément, la partie aval 26 comprend une cavité 38 ouverte en direction de la partie amont 24, configurée pour loger le système d'orientation 36. Cette cavité 38 est délimitée par des parois intérieure et extérieure 26.1, 26.2 espacées en direction de la partie amont 24 et reliées au niveau du bord de fuite 28.

Selon un mode de réalisation, le système d'orientation 36 comprend plusieurs grilles d'aubes, appelées cascades et positionnées au niveau de l'ouverture latérale 32, qui comportent chacune des premières parois positionnées dans des plans approximativement longitudinaux ainsi que des deuxièmes parois positionnées dans des plans approximativement transversaux. Les deuxièmes parois présentent une forme d'aube pour dévier vers l'amont le flux d'air sortant de l'ouverture latérale 32.

Ce mode de réalisation n'est pas satisfaisant car les grilles d'aubes présentent une masse non négligeable.

Selon un autre inconvénient, comme illustré sur la figure 3, le flux d'air dévié par le système de déviation 34 tend à impacter l'extrémité amont 40 de la paroi extérieure 26.2 de la partie mobile 26 si bien qu'il est nécessaire de la renforcer, ce qui tend à augmenter la masse de la nacelle.

La présente invention vise à remédier à tout ou partie des inconvénients précités.

A cet effet, l'invention a pour objet une nacelle d'aéronef comportant une extrémité amont et une extrémité aval, configurée pour canaliser un flux d'air s'écoulant selon une direction longitudinale depuis l'extrémité amont vers l'extrémité aval, la nacelle comportant au moins un dispositif d'inversion de poussée qui comprend :
- au moins une ouverture latérale, distante des extrémités amont et aval, traversant la nacelle et délimitée par un bord aval,
- au moins une partie mobile configurée pour occuper une première position, correspondant à un état inactivé du dispositif d'inversion de poussée, dans laquelle la partie mobile obture l'ouverture latérale ainsi qu'une deuxième position, correspondant à un état activé du dispositif d'inversion de poussée, dans laquelle la partie mobile dégage au moins partiellement l'ouverture latérale,
- au moins un système de déviation configuré pour occuper une première position, lorsque le dispositif d'inversion de poussée est à l'état inactivé, dans laquelle le système de déviation n'interfère pas avec le flux d'air canalisé dans la nacelle ainsi qu'une deuxième position, lorsque le dispositif d'inversion de poussée est à l'état activé, dans laquelle le système de déviation interfère avec le flux d'air canalisé dans la nacelle et l'oriente vers l'ouverture latérale,
- au moins un système d'orientation configuré pour orienter le flux d'air dévié par le système de déviation.

Selon l'invention, le système d'orientation comprend :
- un support comprenant des premier et deuxième montants positionnés au-dessus et au-dessous de l'ouverture latérale,
- au moins un déflecteur transversal positionné approximativement dans un plan perpendiculaire à la direction longitudinale et configuré pour orienter le flux d'air dévié par le système de déviation vers l'extrémité amont de la nacelle, ledit déflecteur transversal s'étendant entre des première et deuxième extrémités reliées respectivement aux premier et deuxième montants du support,
- au moins un déflecteur aval positionné au niveau du bord aval de l'ouverture latérale et configuré pour dévier le flux d'air dévié par le système de déviation vers l'extrémité amont de la nacelle.

Selon l'invention, chaque déflecteur transversal présente une grande dimension et s'étend sur toute la hauteur de l'ouverture, ce qui permet de réduire la masse du système d'orientation. En complément, le déflecteur aval permet de dévier le flux d'air généré par le dispositif d'inversion de poussée afin qu'il n'impacte pas le bord aval de l'ouverture latérale si bien qu'il n'est pas nécessaire de le renforcer.

Selon une autre caractéristique, le déflecteur aval comprend une surface courbe qui s'étend entre un premier bord intérieur positionné dans un premier plan transversal perpendiculaire à la direction longitudinale ainsi qu'un bord extérieur positionné dans un deuxième plan transversal, les bords intérieur et extérieur présentant un rayon de courbure sensiblement identique à celui de la nacelle, le bord intérieur étant plus proche du système de déviation que le bord extérieur.

Selon une autre caractéristique, le deuxième plan transversal est décalé vers l'extrémité amont de la nacelle par rapport au premier plan transversal.

Selon une autre caractéristique, le déflecteur aval s'étend entre des première et deuxième extrémités, la surface courbe présentant dans des plans longitudinaux une courbure concave sensiblement constante de la première extrémité jusqu'à la deuxième extrémité.

Selon une autre caractéristique, le déflecteur aval comprend une extension, positionnée au niveau du bord extérieur, qui présente une surface intérieure orientée vers le conduit annulaire et prolongeant la surface courbe.

Selon une autre caractéristique, la surface intérieure est tronconique et évasée en direction de l'extrémité amont de la nacelle.

Selon une autre caractéristique, le système d'orientation comprend une traverse aval qui comporte au moins une première paroi formant le déflecteur aval, une paroi intérieure reliée à la première paroi au niveau du bord intérieur ainsi qu'une paroi extérieure reliée à la première paroi au niveau du bord extérieur, la paroi extérieure étant cylindrique ou tronconique, s'évasant en direction de l'extrémité amont de la nacelle et formant avec la direction longitudinale un angle compris entre 0 et 45°.

Selon une autre caractéristique, le déflecteur aval est positionné approximativement dans le prolongement du système de déviation lorsque ce dernier est dans la deuxième position.

Selon une autre caractéristique, le support comprend une traverse aval positionnée en aval de l'ouverture latérale, présentant une courbure sensiblement identique à celle de la nacelle et intégrant le déflecteur aval.

Selon une autre caractéristique, le support comprend une traverse amont, les traverses amont et aval ainsi que les premier et deuxième montants formant un cadre délimitant l'ouverture latérale, la surface courbe du déflecteur aval s'étendant du premier montant jusqu'au deuxième montant.

L'invention a également pour objet un aéronef comportant au moins un ensemble de propulsion qui comprend une nacelle selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef et d'un ensemble de propulsion,
- La figure 2 est une coupe schématique d'un ensemble de propulsion équipé d'un dispositif d'inversion de poussée à l'état inactivé illustrant un mode de réalisation de l'art antérieur,
- La figure 3 est une coupe schématique de l'ensemble de propulsion visible sur la figure 2, le dispositif d'inversion de poussée étant à l'état activé,
- La figure 4 est coupe schématique d'un ensemble de propulsion équipé d'un dispositif d'inversion de poussée à l'état inactivé illustrant un mode de réalisation de l'invention,
- La figure 5 est une coupe schématique de l'ensemble de propulsion visible sur la figure 4, le dispositif d'inversion de poussée étant à l'état activé,
- La figure 6 est vue latérale d'une partie d'un ensemble de propulsion comportant un dispositif d'inversion de poussée à l'état activé illustrant un mode de réalisation de l'invention,
- La figure 7 est une coupe en perspective d'une partie d'un ensemble de propulsion comportant un dispositif d'inversion de poussée à l'état activé illustrant un mode de réalisation de l'invention,
- La figure 8 est une coupe d'une partie d'un dispositif d'inversion de poussée à l'état activé illustrant un mode de réalisation de l'invention,
- La figure 9 est une coupe d'une partie d'un dispositif d'inversion de poussée à l'état activé illustrant un autre mode de réalisation de l'invention,
- La figure 10 est une coupe d'un dispositif d'inversion de poussée à l'état activé illustrant un autre mode de réalisation de l'invention.

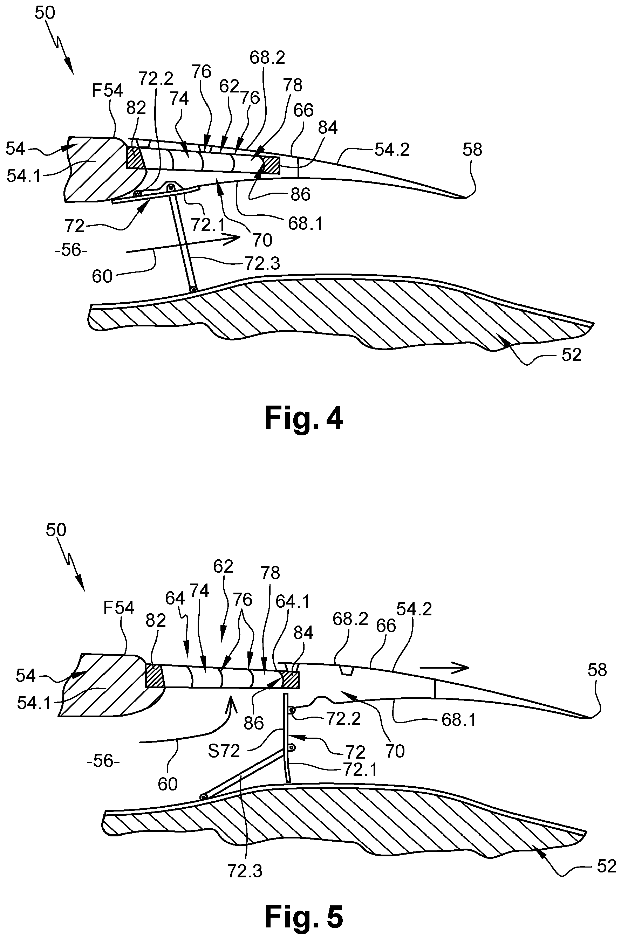

Selon un mode de réalisation visible sur les figures 4, 5 et 6, un ensemble de propulsion 50 comprend une motorisation 52 positionnée à l'intérieur d'une nacelle 54. La nacelle 54 a une forme approximativement tubulaire et délimite avec la motorisation 52 un conduit annulaire 56 dans lequel s'écoule un flux d'air secondaire. La nacelle 54 comprend une partie amont 54.1 et une partie aval 54.2 qui présente un bord de fuite 58. La nacelle 54 présente une surface extérieure F54.

Selon une application, un aéronef comprend au moins un tel ensemble de propulsion. Quel que soit le mode de réalisation, la nacelle 54 est tubulaire et s'étend entre des extrémités amont et aval. La nacelle 54 est configurée pour canaliser un flux d'air 60 selon une direction longitudinale, de l'extrémité amont vers l'extrémité aval.

La nacelle 54 comprend au moins un dispositif d'inversion de poussée 62 positionné au niveau de la partie aval 54.2 et configuré pour occuper un état activé (visible sur la figure 5) dans lequel il dévie au moins une partie du flux d'air 60 circulant dans le conduit annulaire 56 vers l'extérieur et l'extrémité amont de la nacelle 54 ainsi qu'un état inactivé (visible sur la figure 4) dans lequel il ne dévie pas le flux d'air 60 circulant dans le conduit annulaire 56.

Le dispositif d'inversion de poussée 62 comprend au moins une ouverture latérale 64, traversant la nacelle 54 et distante des extrémités amont et aval de la nacelle 54, configurée pour faire communiquer le conduit annulaire 56 et l'extérieur de la nacelle 54, notamment sa surface extérieure F54, ainsi qu'au moins une partie mobile 66 configurée pour occuper une première position, correspondant à l'état inactivé du dispositif d'inversion de poussée 62 (visible sur la figure 4) dans laquelle la partie mobile 66 obture l'ouverture latérale 64 ainsi qu'une deuxième position, correspondant à l'état activé du dispositif d'inversion de poussée 62 (visible sur la figure 5) dans laquelle la partie mobile 66 dégage au moins partiellement l'ouverture latérale 64.

Selon un mode de réalisation, la nacelle 54 comprend deux ouvertures latérales 64 sensiblement symétriques par rapport à un plan longitudinal vertical passant par l'axe de la motorisation.

Selon une configuration, la partie aval 54.2 est un capot tubulaire en O mobile, formant la partie mobile 66, qui se translate selon la direction longitudinale entre une position fermée (visible sur la figure 4) dans laquelle la partie aval 54.2 est en contact avec la partie amont 54.1, lorsque le dispositif d'inversion de poussée 62 est à l'état inactivé, et une position ouverte (visible sur la figure 5) dans laquelle la partie aval 54.2 est écartée de la partie amont 54.1 de manière à générer la (ou les) ouverture(s) latérale(s) 64 entre les parties amont et aval 54.1, 54.2 lorsque le dispositif d'inversion de poussée 62 est à l'état activé.

La partie aval 54.2 comprend une paroi intérieure 68.1 et une paroi extérieure 68.2 reliées au niveau du bord de fuite 58, les parois intérieure et extérieure 68.1, 68.2 délimitant entre elles une cavité 70 ouverte en direction de la partie amont 54.1.

Bien entendu, l'invention n'est pas limitée à cette configuration pour la partie mobile 66.

Le dispositif d'inversion de poussée 62 comprend au moins un système de déviation 72 configuré pour occuper une position rétractée (visible sur la figure 4), lorsque le dispositif d'inversion de poussée 62 est à l'état inactivé, dans laquelle le système de déviation 72 n'interfère pas avec le flux d'air 60 canalisé par la nacelle 54 ainsi qu'une position déployée (visible sur la figure 5), lorsque le dispositif d'inversion de poussée 62 est à l'état activé, dans laquelle le système de déviation 72 est déployé dans le conduit annulaire 56, interfère avec le flux d'air 60 et l'oriente selon des directions radiales (perpendiculaires à la direction longitudinale) vers l'ouverture latérale 64.

Selon un mode de réalisation, pour chaque ouverture latérale 64, le système de déviation 72 comprend au moins un panneau 72.1 ainsi que, pour chaque panneau 72.1, au moins une articulation 72.2 reliant le panneau 72.1 à la nacelle 54 et au moins une biellette 72.3 reliant le panneau 72.1 à la motorisation 52. Bien entendu, l'invention n'est pas limitée à ce mode de réalisation pour le système de déviation 72. Ainsi, chaque panneau pourrait être relié à la motorisation 52 par une articulation.

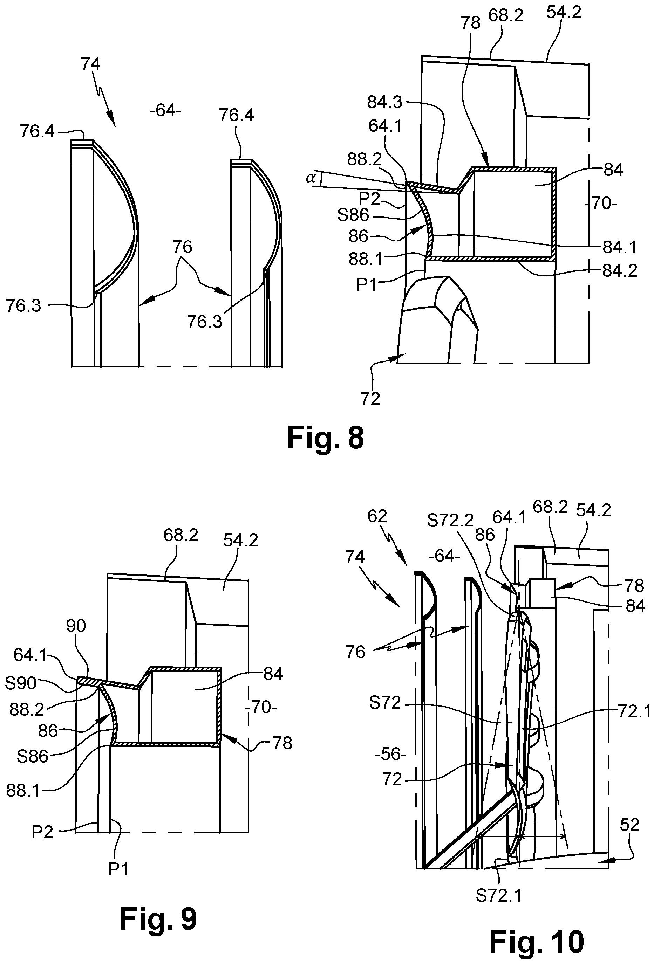

Selon un mode de réalisation, visible sur la figure 10, le système de déviation 72 comprend une surface S72 contre laquelle s'écoule le flux d'air 60 dévié. Selon un premier mode de réalisation, dans la position déployée, la surface S72 est positionnée approximativement dans un plan transversal. Selon un autre mode de réalisation, dans la position déployée, la surface S72 est approximativement tronconique et forme avec un plan transversal un angle compris entre -30° et + 30°. Selon un mode de réalisation, la surface S72 comprend un bord intérieur S72.1 proche de la motorisation 52 et un bord extérieur S72.2 proche de la nacelle 54 dans la position déployée. Selon une configuration privilégiée, la surface S72 du système de déviation est inclinée par rapport à un plan transversal, le bord intérieur S72.1 étant situé dans un premier plan transversal, le bord extérieur S72.2 étant situé dans un deuxième plan transversal décalé vers l'amont par rapport au premier plan transversal. Cette configuration limite les risques d'impact de la paroi extérieure 68.2 de la partie aval 54.2 de la nacelle 54 par le flux d'air dévié par le système de déviation 72.

Le dispositif d'inversion de poussée 62 comprend également au moins un système d'orientation 74 configuré pour orienter au moins une partie du flux d'air 60 dévié par le système de déviation 72 et sortant via l'ouverture latérale 64. Selon un agencement, le système d'orientation 74 est positionné au niveau de l'ouverture latérale 64.

Selon un agencement, le système d'orientation 74 et la cavité 70 sont configurés de sorte qu'à l'état inactivé, le système d'orientation 74 est positionné dans la cavité 70.

Selon un mode de réalisation, le système d'orientation 74 comprend au moins un déflecteur transversal 76, positionné approximativement dans un plan transversal, qui s'étend entre des première et deuxième extrémités 76.1, 76.2. Chaque déflecteur transversal 76 présente des bords intérieur et extérieur 76.3, 76.4 courbes, sensiblement en arc de cercle, reliant les première et deuxième extrémités 76.1, 76.2, le bord intérieur 76.3 étant plus proche du système de déviation 72 que le bord extérieur 76.4. Selon une configuration, les bords intérieur et extérieur 76.3, 76.4 présentent des courbures adaptées à celles des parois intérieure et extérieure 68.1, 68.2 de la partie aval 54.2 de la nacelle 54 de manière à ce que le système d'orientation 74 puisse se loger dans la cavité 70 lorsque le dispositif d'inversion de poussée 62 est à l'état inactivé.

Chaque déflecteur transversal 76 est configuré pour orienter, selon les directions radiales et vers l'extrémité amont, le flux d'air dévié par le système de déviation 72 et sortant de l'ouverture latérale 64.

Selon un mode de réalisation, chaque déflecteur transversal 76 comprend une lame, en forme de portion de couronne, qui présente dans des plans longitudinaux une courbure concave (le centre du rayon de courbure étant décalé vers l'amont par rapport au déflecteur transversal 76).

Selon une configuration, chaque déflecteur transversal 76 a une largeur (distance séparant les bords intérieur et extérieur 76.3, 76.4) et une courbure constantes entre ses première et deuxième extrémités 76.1, 76.2. Ainsi, le flux d'air sortant de la nacelle 54 est sensiblement constant sur le pourtour de la nacelle 54. Selon un agencement, les déflecteurs transversaux 76 ont des largeurs différentes qui diminuent de l'amont vers l'aval.

Le nombre de déflecteurs transversaux 76 et leur forme sont déterminés de manière à obtenir une même fonction aérodynamique que les cascades de l'art antérieur, à savoir un débit suffisant afin d'éviter les problèmes de fonctionnement de la soufflante de la motorisation 52 et une efficacité en matière de contre-poussée.

Selon un mode de réalisation, le système d'orientation 74 comprend au moins un support 78 solidaire de la nacelle 54 auquel est relié chaque déflecteur transversal 76.

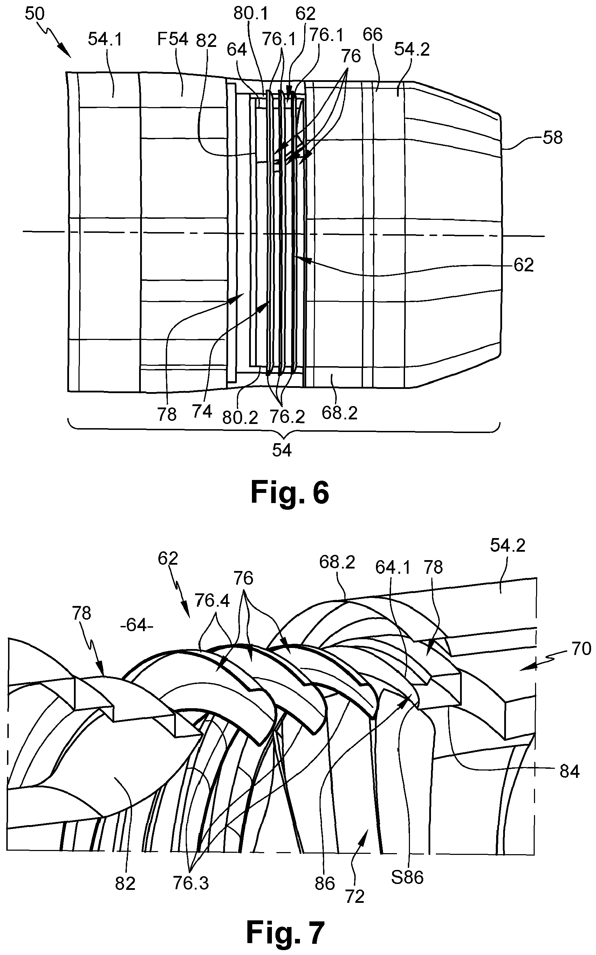

Selon un mode de réalisation visible sur la figure 6, le support 78 comprend des premier et deuxième montants 80.1, 80.2, parallèles entre eux et à la direction longitudinale, positionnés au-dessus et au-dessous de l'ouverture latérale 64, la première extrémité 76.1 de chaque déflecteur transversal 76 étant reliée au premier montant 80.1, la deuxième extrémité 76.2 de chaque déflecteur transversal 76 étant reliée au deuxième montant 80.2.

Selon une configuration, le support 78 comprend une traverse amont 82, orientée selon une direction parallèle à un plan transversal et positionnée en amont de l'ouverture latérale 64, à laquelle sont reliés les premier et deuxième montants 80.1, 80.2. La traverse amont 82 présente une courbure sensiblement identique à celle de la nacelle 54. La traverse amont 82 est solidaire de la partie amont 54.1 de la nacelle 54 ou intégrée à cette dernière.

Le support 78 comprend une traverse aval 84 orientée selon une direction parallèle à un plan transversal et positionnée en aval de l'ouverture latérale 64. La traverse aval 84 présente une courbure sensiblement identique à celle de la nacelle 54.

Selon une configuration, les traverses amont et aval 82, 84 sont parallèles entre elles et reliées par les premier et deuxième montants 80.1, 80.2. Ainsi les traverses amont et aval 82, 84 ainsi que les premier et deuxième montants 80.1, 80.2 forment un cadre délimitant l'ouverture latérale 64.

Selon une particularité de l'invention, la traverse aval 84 comprend au moins une face formant un déflecteur aval 86 configuré pour dévier vers l'extérieur et l'extrémité amont de la nacelle 54 le flux d'air dévié par le système de déviation 72 afin qu'il n'impacte pas la paroi extérieure 68.2 de la partie aval 54.2 de la nacelle 54.

Le déflecteur aval 86 s'étend entre des première et deuxième extrémités, reliées respectivement aux premier et deuxième montants 80.1, 80.2, et présente dans des plans longitudinaux une section transversale, sensiblement constante de la première extrémité jusqu'à la deuxième extrémité.

Selon un agencement, le déflecteur aval 86 est positionné approximativement dans le prolongement du système de déviation 72, plus particulièrement de son (ses) panneau(x) 72.1, lorsque le système de déviation 72 est dans la position déployée de sorte que le flux d'air dévié par le système de déviation 72 impacte le déflecteur aval 86 et soit dévié par ce dernier.

Le déflecteur aval 86 comprend une surface courbe S86 qui s'étend entre des bords intérieur et extérieur 88.1, 88.2, reliant les première et deuxième extrémités, le bord intérieur 88.1 étant plus proche du système de déviation 72 que le bord extérieur 88.2. Cette surface courbe S86 présente dans des plans longitudinaux une courbure concave sensiblement constante de la première extrémité jusqu'à la deuxième extrémité. Cette courbure concave est adaptée pour dévier le flux d'air dévié par le système de déviation 72 vers l'extérieur et l'extrémité amont de la nacelle 54.

Les bords intérieur et extérieur 88.1, 88.2 présentent un rayon de courbure sensiblement identique à celui de la nacelle 54 pour permettre au déflecteur aval 86 d'être positionné dans la cavité 70 lorsque le dispositif d'inversion de poussée est à l'état inactivé.

Selon une configuration, le bord intérieur 88.1 est positionné dans un premier plan transversal P1 et le bord extérieur 88.2 est positionné dans un deuxième plan transversal P2 décalé vers l'amont par rapport au premier plan transversal P1.

Selon un mode de réalisation visible sur la figure 9, la traverse aval 84 est une structure creuse. La traverse aval 84 comprend au moins une première paroi 84.1 qui forme le déflecteur aval 86, une paroi intérieure 84.2 reliée à la première paroi 84.1 au niveau du bord intérieur 88.1 ainsi qu'une paroi extérieure 84.3 reliée à la première paroi 84.1 au niveau du bord extérieur 88.2. La paroi intérieure 84.2 peut être sensiblement cylindrique. Selon un agencement, la paroi extérieure 84.3 est cylindrique ou tronconique et s'évase en direction de l'extrémité amont de la nacelle. Ainsi, dans un plan longitudinal, la paroi extérieure 84.3 forme avec la direction longitudinale un angle α compris entre 0 et 45°. Le fait de faire varier l'angle α permet d'augmenter la dimension du déflecteur aval 86 et de contrôler l'efficacité du flux d'air dévié.

Selon un autre mode de réalisation visible sur la figure 10, le déflecteur aval 86 comprend une extension 90, positionnée au niveau du bord extérieur 88.2, qui présente une surface intérieure S90, orientée vers le conduit annulaire 56, prolongeant la surface courbe S86. L'extension 90 se présente sous la forme d'une plaque et la surface intérieure S90 est tronconique et évasée en direction de l'extrémité amont de la nacelle 54.

Selon un mode de réalisation, le déflecteur aval 86 est intégré à la traverse aval 84 du support 78. Cette dernière peut être métallique ou réalisée en matériau composite. Elle peut être pleine ou creuse. Selon ce mode de réalisation, l'une des faces de la traverse aval 84 forme la surface courbe S86 du déflecteur aval 86, la surface courbe S86 s'étendant du premier montant 80.1 jusqu'au deuxième montant 80.2.

Selon un autre mode de réalisation, le déflecteur aval 86 est indépendant du support 78.

Quel que soit le mode de réalisation, l'ouverture latérale 64 est délimitée par un bord aval 64.1. En complément, le système d'orientation 74 comprend au moins un déflecteur aval 86 positionné au niveau du bord aval 64.1 de l'ouverture latérale 64 et configuré pour dévier vers l'extrémité amont de la nacelle 54 le flux d'air dévié par le système de déviation 72 afin qu'il n'impacte pas la paroi extérieure 68.2 de la partie aval 54.2 de la nacelle 54. Ainsi, cette paroi extérieure 68.2 n'a pas besoin d'être renforcée pour résister au flux d'air dévié par le dispositif d'inversion de poussée.

## Revendications

1. Nacelle (54) d'aéronef comportant une extrémité amont et une extrémité aval, configurée pour canaliser un flux d'air (60) s'écoulant selon une direction longitudinale depuis l'extrémité amont vers l'extrémité aval, la nacelle comportant au moins un dispositif d'inversion de poussée (62) qui comprend :
- au moins une ouverture latérale (64), distante des extrémités amont et aval, traversant la nacelle et délimitée par un bord aval (64.1),
- au moins une partie mobile (66) configurée pour occuper une première position, correspondant à un état inactivé du dispositif d'inversion de poussée, dans laquelle la partie mobile (66) obture l'ouverture latérale (64) ainsi qu'une deuxième position, correspondant à un état activé du dispositif d'inversion de poussée (62), dans laquelle la partie mobile (66) dégage au moins partiellement l'ouverture latérale (64),
- au moins un système de déviation (72) configuré pour occuper une première position, lorsque le dispositif d'inversion de poussée (62) est à l'état inactivé, dans laquelle le système de déviation (72) n'interfère pas avec le flux d'air (60) canalisé dans la nacelle (54) ainsi qu'une deuxième position, lorsque le dispositif d'inversion de poussée (62) est à l'état activé, dans laquelle le système de déviation (72) interfère avec le flux d'air (60) canalisé dans la nacelle (54) et l'oriente vers l'ouverture latérale (64),
- au moins un système d'orientation (74) configuré pour orienter le flux d'air (60) dévié par le système de déviation (72),
**caractérisée en ce que** le système d'orientation (74) comprend :
- un support (78) comprenant des premier et deuxième montants (80.1, 80.2) positionnés au-dessus et au-dessous de l'ouverture latérale (64),
- au moins un déflecteur transversal (76) positionné approximativement dans un plan perpendiculaire à la direction longitudinale et configuré pour orienter le flux d'air dévié par le système de déviation (72) vers l'extrémité amont de la nacelle, ledit déflecteur transversal (76) s'étendant entre des première et deuxième extrémités (76.1, 76.2) reliées respectivement aux premier et deuxième montants (80.1, 80.2) du support (78),
- au moins un déflecteur aval (86) positionné au niveau du bord aval (64.1) de l'ouverture latérale (64) et configuré pour dévier le flux d'air dévié par le système de déviation (72) vers l'extrémité amont de la nacelle (54).

2. Nacelle d'aéronef selon la revendication précédente, **caractérisée en ce que** le déflecteur aval (86) comprend une surface courbe (S86) qui s'étend entre un premier bord intérieur (88.1) positionné dans un premier plan transversal (P1) perpendiculaire à la direction longitudinale ainsi qu'un bord extérieur (88.2) positionné dans un deuxième plan transversal (P2), les bords intérieur et extérieur (88.1, 88.2) présentant un rayon de courbure sensiblement identique à celui de la nacelle (54), le bord intérieur (88.1) étant plus proche du système de déviation (72) que le bord extérieur (88.2).

3. Nacelle d'aéronef selon la revendication précédente, **caractérisée en ce que** le deuxième plan transversal (P2) est décalé vers l'extrémité amont de la nacelle (54) par rapport au premier plan transversal (P1).

4. Nacelle d'aéronef selon l'une des revendications 2 à 3, **caractérisée en ce que** le déflecteur aval (86) s'étend entre des première et deuxième extrémités et **en ce que** la surface courbe (S86) présente dans des plans longitudinaux une courbure concave sensiblement constante de la première extrémité jusqu'à la deuxième extrémité.

5. Nacelle d'aéronef selon l'une des revendications 2 à 4, **caractérisée en ce que** le déflecteur aval (86) comprend une extension (90), positionnée au niveau du bord extérieur (88.2), qui présente une surface intérieure (S90) orientée vers le conduit annulaire (56) et prolongeant la surface courbe (S86).

6. Nacelle d'aéronef selon la revendication précédente, **caractérisée en ce que** la surface intérieure (S90) est tronconique et évasée en direction de l'extrémité amont de la nacelle (54).

7. Nacelle d'aéronef selon l'une des revendications 2 à 6, **caractérisée en ce que** le système d'orientation (74) comprend une traverse aval (84) qui comporte au moins une première paroi (84.1) formant le déflecteur aval (86), une paroi intérieure (84.2) reliée à la première paroi (84.1) au niveau du bord intérieur (88.1) ainsi qu'une paroi extérieure (84.3) reliée à la première paroi (84.1) au niveau du bord extérieur (88.2), la paroi extérieure (84.3) étant cylindrique ou tronconique, s'évasant en direction de l'extrémité amont de la nacelle et formant avec la direction longitudinale un angle (α) compris entre 0 et 45°.

8. Nacelle d'aéronef selon l'une des revendications précédentes, **caractérisée en ce que** le déflecteur aval (86) est positionné approximativement dans le prolongement du système de déviation (72) lorsque ce dernier est dans la deuxième position.

9. Nacelle d'aéronef selon l'une des revendications précédentes, **caractérisée en ce que** le support (78) comprend une traverse aval (84) positionnée en aval de l'ouverture latérale (64), présentant une courbure sensiblement identique à celle de la nacelle (54) et intégrant le déflecteur aval (86).

10. Nacelle d'aéronef selon la revendication précédente, **caractérisée en ce que** le support (78) comprend une traverse amont (82), les traverses amont et aval (82, 84) ainsi que les premier et deuxième montants (80.1, 80.2) formant un cadre délimitant l'ouverture latérale (64), la surface courbe (S86) du déflecteur aval (86) s'étendant du premier montant (80.1) jusqu'au deuxième montant (80.2).

11. Aéronef comportant au moins un ensemble de propulsion qui comprend une nacelle selon l'une des revendications précédentes.
